# EUROPEAN PATENT SPECIFICATION

(11) **EP 3 228 388 B1**
(45) Date of publication and mention of the grant of the patent: **28.08.2019**
(21) Application number: 15865064.8
(22) Date of filing: 03.12.2015
(51) Int. Cl.: B05B 14/462, B01D 47/02, C02F 1/461, C02F 1/24, C02F 1/52

(54) **SYSTEM OF COLLECTING PAINT RESIDUE AND METHOD OF COLLECTING PAINT RESIDUE**
SYSTEM ZUM SAMMELN VON FARBRÜCKSTÄNDEN UND VERFAHREN ZUM SAMMELN VON FARBRÜCKSTÄNDEN
SYSTÈME DE COLLECTE DE RÉSIDUS DE PEINTURE, ET PROCÉDÉ DE COLLECTE DE RÉSIDUS DE PEINTURE

(30) Priority: 04.12.2014 JP 2014245748
(43) Date of publication of application: 11.10.2017
(73) Proprietor: TSK Corporation, Fukuroi-shi, Shizuoka 437-0032 (JP)
(72) Inventor: TOKUSHIMA, Tadao, Yokohama-shi, Kanagawa 222-0037 (JP)
(74) Representative: Müller-Boré & Partner Patentanwälte PartG mbB
(86) International application number: PCT/JP2015/084064
(87) International publication number: WO 2016/088857

(56) References cited:
- JP-A- H06 114 210
- JP-A- H06 190 317
- JP-A- H08 182 948
- JP-A- 2013 212 451
- JP-B2- 5 286 580
- JP-U- 3 158 129

## Description

### Technical Field

The present invention relates to a method of efficiently collecting a paint residue which is not utilized in the field of spray painting used on an automobile painting line or the like.

### Background Art

In a spray painting line, in general, about 80% of a paint residue which is not adhered to a target to be painted and which is not utilized is present, and it is problematic to process the paint residue. When the paint is an oil paint, alkaline water starts to be used for processing the oil paint. In this case, the oil paint is saponified in the alkaline water and is precipitated. Thereafter, the oil paint is subjected to neutralization processing using acid water and is processed as an industrial waste.

On paint processing, Japanese Unexamined Patent Application Publication No. 8-718 discloses that in a spray paint processing method for collecting a scattered spray paint with a water curtain, in order to perform deodorization or the like, the water curtain is formed with water (reduced water) whose oxidation-reduction potential is lowered to 200 mV or less by the application of a voltage.

In addition, Japanese Patent No. 5286580 discloses a method of processing an organic solvent-based spray mist that includes: a step of collecting, in a method of collecting an organic solvent-based spray mist, a spray mist by bringing, at a high speed, the spray mist into direct contact with water which contains strong alkaline electrolyzed water, whose pH is 9 or more and whose ORP is kept equal to or less than +200 mV and making the spray mist collide with the water; and a step of separating a solid content generated from the water containing the strong alkaline electrolyzed water in which the spray mist is collected. According to the specification of this publication, the strong alkaline electrolyzed water is supplied from a strong alkaline electrolyzed water generator to a storage chamber, and the spray mist is collected with the strong alkaline electrolyzed water stored in the storage chamber and is fed to a separation chamber.

In recent years, in order to counter disorders to human bodies caused by an oil paint solvent and environmental measures, water paints have been widely used. In this regard, Japanese Unexamined Patent Application Publication No. 2006-181503 discloses an invention for providing a method of processing painting booth circulating water in which even in a painting booth using a water-based paint, a paint component can be easily separated and extracted from paint collecting circulating water. The method of processing the painting booth circulatingwater includes : a stepof adding an alkaline solution to the paint collecting circulating water in the painting booth; a step of filtering the circulating water to which the alkaline solution is added and separating it into a filtrate and a residue; a step of neutralizing the filtrate; and a step of reusing the neutralized filtrate as the paint collecting circulating water. Japanese Unexamined Patent Application Publication No. 2006-181503 also discloses that as the alkaline aqueous solution, alkaline electrolyzed water is used. According to the specification of this publication, the circulating water containing a collected overspray paint is guided to a first tank, the alkaline solution is added to the first tank from an alkaline solution adding device and the resin component thus dispersed is gelled.

Furthermore, Japanese Unexamined Patent Application Publication No. 2008-119612 discloses that paint sludge coagulated with a coagulant is floated and separated with micro bubbles.

### Citation List

### Patent Literatures

Patent Literature 1: Japanese Unexamined Patent Application Publication No. 8-718
Patent Literature 2: Japanese Patent No. 5286580
Patent Literature 3: Japanese Unexamined Patent Application Publication No. 2006-181503
Patent Literature 4: Japanese Unexamined Patent Application Publication No. 2008-119612

### Summary of the Invention

According to the invention disclosed in Japanese Unexamined Patent Application Publication No. 8-718, it is possible to obtain the deodorization action by collecting the scattered spray paint with the water whose oxidation-reduction potential is lowered by electrical processing. However, Japanese Unexamined Patent Application Publication No. 8-718 does not disclose that after the paint is collected, the collected paint is precipitated in the water and is collected. In other words, consideration is not given to the point at which the paint residue is precipitated and collected.

On the other hand, according to the inventions disclosed in Japanese Patent No. 52 86580 and Japanese Unexamined Patent Application Publication No. 2006-181503, the alkaline solution such as the alkaline electrolyzed water is used as the water for collecting the paint. The collected paint residue is precipitated in the water and is collected. However, in order to precipitate the paint residue, it is necessary to keep the properties (such as pH and ORP) of the water for collecting the paint in such a range that the paint residue is precipitated. The pH, the ORP and the like of the paint collecting water may be varied over time after the generation. For example, in the case of alkaline electrolyzed water having a negative ORP value, unless in an enclosed space, the value of the ORP is degraded to about 200 mV even in ultrapure water for about 1 hour, and is degraded in normal water with contained impurities and gases for an extremely short time. This is because carbon dioxide gas and the like in the air react with the alkaline electrolyzed water. When electrolyzed water is generated by utilization of hard water containing salts, the degradation rate of the ORP is further increased. Hence, in order to keep the pH, the ORP and the like of water for collecting a paint at desired values, it is necessary to continue to constantly supply a fresh alkaline solution to a storage chamber or a tank, and thus a large amount of alkaline solution is needed. Consequently, the cost necessary for processing a paint residue is increased. When alkaline electrolyzed water is used as the alkaline solution, the electrolyzed water is expensive, and thus the processing cost is further increased.

Moreover, when the paint is a water paint, it is more difficult to precipitate a paint residue. As water paints, there are cationic and anionic paints, the pH, the ORP and the like necessary for the precipitation differ depending on the types of water paints and thus the pH and ORP values of paint collecting water need to be more strictly managed, with the result that it is necessary to inject a larger amount of chemical solution in order to maintain the properties. Furthermore, depending on the types (anionic and cationic) of water paints, no paint residue may be precipitated simply by use of an alkaline solution.

Hence, a technology is required in which it is possible to enhance a chemical reaction for promoting the precipitation of a paint residue so that even when the pH and ORP values are slightly varied, the paint residue can be sufficiently precipitated.

According to the invention disclosed in Japanese Unexamined Patent Application Publication No. 2008-119612, micro bubbles or nanobubbles are used, and thus a target to be separated such as an oil or paint sludge is floated and separated in a processing liquid within a chamber. However, in this invention, the agitation action of the micro bubbles is not strong, and thus there is a problem in the promotion of a reaction in a stationary storage chamber. When the paint is a water paint, since the water paint has a polarity and the time for a chemical reaction with processing water differs, a paint residue may not be precipitated only by use of the simple processing water and the micro bubble in the storage chamber.

In other words, an object of the present invention is to provide a system of collecting a paint residue and a method of collecting a paint residue which can efficiently precipitate the paint residue.

The inventor et al. , of the present application have performed extensive research so as to solve the above problem. Consequently, they found that the above problem can be solved by using, as paint collecting water, bubble-containing alkaline water or acid water in a paint collecting portion and a storage chamber as necessary.

Specifically, the present invention includes the following items.
[1] A system of collecting a paint residue, the system including: a bubble-containing functional water generation portion which is configured so as to generate functional water that is bubble-containing alkaline water or acid water; a paint collecting portion which collects the paint residue with the functional water; and a storage portion which recovers the functional water from the paint collecting portion and which stores the functional water.
[2] The system of collecting a paint residue according to theaboveitem [1], where the functional water generation portion is configured so as to generate micro bubbles as the bubbles.
[3] The system of collecting a paint residue according to the item [1] or [2], where the bubbles are formed by oxygen, hydrogen or air.
[4] The system of collecting a paint residue according to any one of the above items [1] to [3], where the alkaline water or acid water is alkaline electrolyzed water or acid electrolyzed water which is obtained by electrolysis.
[5] The system of collecting a paint residue according to any one of the above items [1] to [4], where the alkaline water or acid water is gas-dissolved water which is obtained by dissolving ozone, active hydrogen or hydrogen gas in water.
[6] The system of collecting a paint residue according to any one of the above items [1] to [5], where the paint residue is derived from a cationic paint, and the functional water has a pH of 8 to 14.
[7] The system of collecting a paint residue according to any one of the above items [1] to [5], where the paint residue is derived from an anionic paint, and the functional water has a pH of 1 to 6.
[8] The system of collecting a paint residue according to any one of the above items [1] to [7], the system further including: a measuring device which is configured so as to measure the pH of the functional water in the storage portion, where the functional water generation portion is configured so as to replenish, based on the measurement results with the measuring device, the storage portion with the alkaline water or acid water such that the pH of the functional water in the storage portion has a preset value.
[9] The system of collecting a paint residue according to anyone of the above items [1] to [8], where the bubble-containing functional water generation portion includes: a functional water generator which generates the alkaline water or acid water; and a bubble generator which generates the bubbles in the alkaline water or acid water, and the bubble generator is configured so as to receive the alkaline water or acid water from the functional water generator without intervention of the storage portion.
[10] The system of collecting a paint residue according to any one of the above items [1] to [8], where the bubble-containing functional water generation portion includes: a functional water generator which generates the alkaline water or acid water; and a bubble generator which generates the bubbles in the alkaline water or acid water, the functional water generator is configured so as to supply the functional water to the storage portion and the bubble generator is configured so as to receive the functional water from the storage portion.
[11] The system of collecting a paint residue according to any one of the above items [1] to [10], where the paint collecting portion is configured so as to form a water curtain of the functional water.
[12] A method of collecting a paint residue, the method including: a step of generating functional water that is bubble-containing alkaline water or acid water; a step of collecting the paint residue with the functional water; and a step of recovering the functional water after the collecting step and storing the functional water.
[13] The method of collecting a paint residue according to the above item [12], where the paint residue is derived from a cationic paint, and the functional water has a pH of 8 to 14.
[14] The method of collecting a paint residue according to the above item [12], where the paint residue is derived from an anionic paint, and the functional water has a pH of 1 to 6.

### Effects of the Invention

According to the present invention, a system of collecting a paint residue and a method of collecting a paint residue are provided which can efficiently precipitate the paint residue.

### Brief Description of the Drawings

Fig. 1 is a diagram showing the outline of a collecting system according to the present invention;
Fig. 2 is a diagram showing a collecting system according to a first embodiment;
Fig. 3 is a diagram showing a collecting system according to a second embodiment;
Fig. 4 is a diagram showing a collecting system according to a third embodiment;
Fig. 5 is a schematic diagram showing a collecting system used in Examples; and
Fig. 6 is a photograph of the Examples showing an effect of functional water stored in a storage chamber. Modes for Carrying Out the Invention

Embodiments of the present invention will be described below with reference to the drawings.

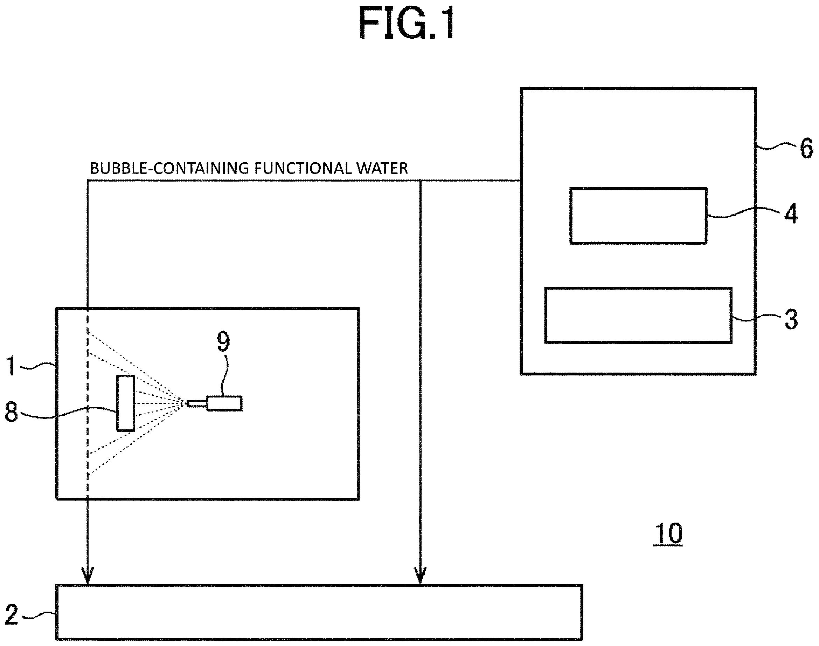

Fig. 1 is a block diagram showing the outline of a collecting system 10 for a paint residue according to the present invention. As shown in Fig. 1, the collecting system 10 includes a bubble-containing functional water generation portion 6, a painting booth 1 (paint collecting portion) and a storage chamber 2 (storage portion).

In the collecting system 10, the bubble-containing functional water generation portion 6 generates functional water which is bubble-containing alkaline water or acid water. The generated functional water is supplied to the painting booth 1. In the painting booth 1, a paint is sprayed from a painting nozzle 9 to a painted object 8, and thus spray painting is performed. Here, a paint residue which is not adhered to the painted object 8 is collected by the functional water. The functional water collecting the paint residue is fed from the painting booth 1 to the storage chamber 2 and is stored in the storage chamber 2. In the storage chamber 2, the paint residue is precipitated in the functional water and is deposited or floated. The deposited or floated paint residue is recovered with an appropriate means.

Here, in the present invention, the paint residue is collected with the bubble-containing functional water. Consequently, a shock wave generated when the bubbles disappear in the functional water promotes a reaction between the paint residue and the functional water, and thus the precipitation reaction of the paint residue is promoted. The paint residue and the functional water are agitated by the bubbles in the liquid, and thus the probability of contact between a functional group on the surface of the particles of the paint residue and the fresh functional water is increased, with the result that the precipitation reaction is promoted. Consequently, even when a water paint is used in which it is difficult to perform precipitation processing, it is possible to rapidly precipitate a paint residue.

In the present invention, the bubble-containing functional water is supplied to the painting booth 1. In other words, unlike a case where bubbles are generated only in the liquid within the storage chamber, the paint residue produced at the time of spray painting makes contact with the bubble-containing functional water. Consequently, the reaction between the paint residue and the functional water is further promoted by a shock at the time of contact, and thus it is possible to more rapidly precipitate the paint residue.

Since the precipitation reaction is promoted, even when the properties (such as pH) of the functional water in the storage chamber 2 are slightly varied, it is possible to precipitate the paint residue. Hence, it is not necessary to replenish the storage chamber 2 with alkaline water or acid water for maintaining the properties of the functional water in the storage chamber 2. Consequently, it is possible to reduce the cost necessary for generating the functional water.

The configuration of the collecting system 10 will be described in detail below.

### (First embodiment)

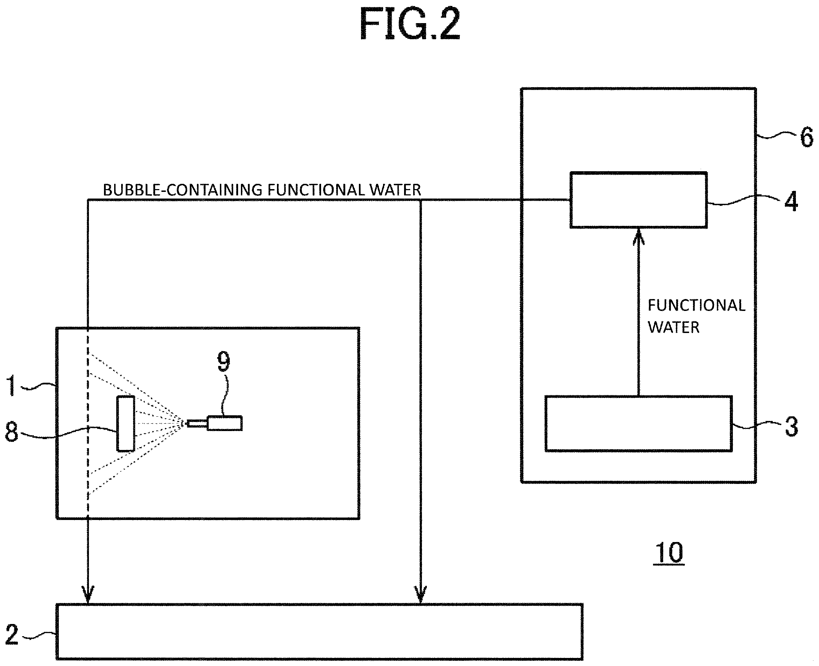

Fig. 2 is a block diagram showing a collecting system 10 according to a first embodiment. In the present embodiment, a bubble-containing functional water generation portion 6 includes a functional water generator 3 and a bubble generator 4. The functional water generator 3 has the function of generating alkaline water or acid water as functional water. The bubble generator 4 receives the functional water from the functional water generator 3, makes the functional water generate bubbles and supplies the bubbles to the painting booth 1.

### [Functional water generator 3]

When a paint residue as a target to be processed is derived from a cationic water paint having an ammonium group or the like, the functional water generator 3 preferably generates the alkaline water as the functional water. The alkaline water is used, and thus in the storage chamber 2, the surface charge of the paint residue is removed, with the result that a paint component is precipitated. Specifically, a resin component is floated as floating sludge, and a pigment component (in many cases, a metal component) is deposited as a deposit. Consequently, the resin component and the pigment component can be separated and recovered.

In this case, the pH of the functional water generated with the functional water generator 3 preferably falls within a range of 8 to 14. When the pH is less than 8, there is a tendency that the precipitation reaction of the cationic paint residue does not sufficiently proceed and that the paint residue is insufficiently precipitated. On the other hand, when the pH exceeds 14, it is difficult to generate the functional water, and thus the cost necessary for generating the functional water is increased.

Furthermore, in this case, the oxidation-reduction potential ORP (Ag/AgCl electrode) of the generated functional water more preferably falls within a range of -1000 mV to -200 mV. When the ORP exceeds -200 mV, there is a tendency that the precipitation reaction of the cationic paint residue does not sufficiently proceed and that the paint residue is insufficiently precipitated. When the ORP is less than -1000 mV, the cost necessary for generating the functional water is increased.

On the other hand, when the paint residue as the target to be processed is derived from an anionic water paint having a carboxyl group or the like, the functional water generator 3 preferably generates the acid water as the functional water. The acid water is used, and thus the surface charge of the anionic paint residue is removed, with the result that a paint is precipitated. Even in this case, in the storage chamber 2, a resin component is floated as floating sludge, and a pigment component (in many cases, a metal component) is deposited as a deposit, with the result that the resin component and the pigment component can be separated and recovered.

In this case, the pH of the generated functional water preferably falls within a range of 1 to 6. When the pH exceeds 6, there is a tendency that the paint residue is insufficiently precipitated. On the other hand, when the pH of the functional water is less than 1, there is a tendency that the cost necessary for generating the functional water is increased. The ORP of the generated functional water preferably falls within a range of 200 mV to 1200 mV. When the ORP is less than 200 mV, there is a tendency that the paint residue is insufficiently precipitated. On the other hand, when the ORP exceeds 1200 mV, it is difficult to generate the functional water, and thus the cost necessary for generating the functional water tends to be increased.

The collecting system 10 according to the present embodiment can also be applied to a case where the paint residue as the target to be collected is derived from an oil paint. In this case, the functional water generator 3 preferably uses alkaline water as the functional water. The alkaline water is used, and thus in the storage chamber 2, a resin component in the paint residue is saponified and precipitated. A pigment component (for example, a metal component) is also precipitated and deposited. The resin component is floated as floating sludge in the storage chamber 2, and the pigment component is precipitated as a deposit, with the result that the resin component and the pigment component can be separated and recovered.

As the functional water, for example, any one of the following or a combination thereof can be used.
(1) A chemical agent (for example, NaOH, Na₂CO₃) which shows alkalinity in an aqueous solution or an aqueous solution of a chemical agent (for example, hydrochloric acid) which shows acidity
(2) Electrolyzed water obtained by electrolysis of water
(3) Gas-dissolved water obtained by dissolving active oxygen or active hydrogen in acid-alkali-added water

Among them, when alkaline water or acid water is obtained by electrolysis of water, the functional water generator 3 can be configured with an anode, a cathode and a separation membrane. The separation membrane is arranged between the anode and the cathode. In the functional water generator 3 configured as described above, water which contains an electrolyte (such as NaCl) as necessary is electrolyzed, and thus it is possible to obtain acidic electrolyzed water from the anode and it is possible to obtain alkaline electrolyzed water from the cathode. As the separation membrane, for example, a proton conducting membrane such as Nafion which only passes hydrogen ions therethrough and an unglazed ceramic membrane or the like which also passes metal ions therethrough can be used. As an electrode material, for example, platinum, titanium and graphite electrodes can be used. The pH and ORP of the electrolyzed water can be controlled by the material, the added amount and the energized electric amount of the electrolyte which is used to maintain electrical conductivity. For example, as the alkaline electrolyzed water, the functional water whose pH falls within a range of 8 to 13 and whose ORP falls within a range of -200 mV to -1000 mV can be obtained. Since in the electrolyzed water, the radius of a water cluster molecular is low, and the surface tension is reduced, the electrolyzed water easily reacts with paint molecules and easily precipitates the paint residue.

When the electrolyzed water is obtained, the water source of the functional water generator 3 may be the storage chamber 2 or a water source other than the storage chamber 2. However, the water source of the functional water generator 3 is preferably separate from the storage chamber 2. When the functional water in the storage chamber 2 is electrolyzed again, the storage chamber 2 and the functional water generator 3 need to be connected to each other by piping, and a filter or the like for removing the particles of the paint residue needs to be provided halfway through the piping. When a water source other than the storage chamber 2 is used, the cost necessary for the filter or the like can be reduced.

When the functional water is the gas-dissolved water, the functional water generator 3 is configured so as to dissolve, in the water, oxygen, ozone, active hydrogen or hydrogen gas.

When the gas-dissolved water is used, as compared with a case where alkaline water or acid water which is prepared simply by use of a chemical agent is used, it is possible to accelerate the reaction between the paint residue and the functional water.

When the gas-dissolved water is used as the functional water, unlike a case where the functional water is generated with the electrolyzed water, it is not necessary to clean and replace the electrode material and the separation membrane, with the result that it is possible to reduce the cost. Unlike alkaline water or acid water which is obtained simply by adding an alkaline chemical agent or an acid chemical agent, it is possible to obtain the functional water whose OPR falls within a desired wide range.

### [Bubble generator 4]

The bubble generator 4 has the function of generating bubbles in the functional water.

As the bubbles, micro bubbles are preferably used. Here, a micro bubble refers to a bubble whose diameter falls within a range of 10 to 1000 µm. The diameter of the micro bubble preferably falls with in a range of 50 to500 µm. When the diameter is less than 10 µm, the manufacturing cost for the micro bubbles tends to be increased. Moreover, it is likely that it is impossible to obtain a sufficient agitation effect. When the diameter exceeds 1000 µm, it is likely that the pressure of a shock wave when the bubbles burst is reduced and that it is impossible to sufficiently obtain the effect of promoting the chemical reaction between the paint collecting water and the paint residue. When the agitation effect is enhanced as necessary, large bubbles may be mixed with the micro bubbles.

The bubbles are preferably formed with oxygen, hydrogen or air.

The bubble generator 4 can generate the micro bubbles with, for example, any one of configurations (1) to (3) below.
(1) The bubble generator 4 is configured so as to generate the micro bubbles by passing a mixture of the functional water and a gas (oxygen, hydrogen or air) through an agitation member (high-speed gear) which is rotated at a high speed.
(2) The bubble generator 4 is configured so as to forcibly dissolve a gas (oxygen, hydrogen or air) in the functional water under high pressure. The functional water in which the gas is dissolved under high pressure is released, and thus the solubility is decreased by reduction of pressure, with the result that the micro bubbles are generated from the released gas.
(3) The bubble generator 4 is configured so as to pass a mixture of a gas (oxygen, hydrogen or air) and the functional water through a special polymer membrane. As the special polymer membrane, for example, there is a fluorine-containing porous polymer membrane. By passing the special polymer membrane therethrough, it is possible to generate the micro bubbles.

Among the methods (1) to (3) described above, the methods (2) and (3) are suitable for the present invention.

The bubble-containing functional water which is generated with the bubble generator 4 is preferably supplied not only to the painting booth 1 but also directly to the storage chamber 2. In this case, the functional water in which the bubbles are generated is preferably supplied to the storage chamber 2 from the side surface or the bottom surface of the storage chamber 2.

### [Painting booth 1]

The painting booth 1 is a space in which spray painting is performed on the painted object 8. In the painting booth 1, for example, a water curtain (water membrane) is formed with the bubble-containing functional water. Specifically, the bubble-containing functional water flows down on the wall surface of a water curtain formation member provided in the painting booth 1 so as to form the water membrane. Then, the paint residue generated at the time of spray painting collides with the water curtain and is thereby collected by the bubble-containing functional water. Since the paint residue collides with the water curtain formed with the bubble-containing functional water, the paint residue and the molecules of the functional water more intensely contact each other due to the shock at the time of collision and the effect of the bubbles, and thus it is possible to further promote the precipitation reaction. However, in the painting booth 1, the bubble-containing functional water does not necessarily need to form the water curtain. For example, the painting booth 1 may be configured such that the bubble-containing functional water flows along a horizontal direction. In this case, the paint residue is collected by the bubble-containing functional water on the water surface formed by the bubble-containing functional water.

### [Storage chamber 2]

As long as the storage chamber 2 is configured such that the storage chamber 2 can store the functional water collecting the paint residue, the storage chamber 2 is not particularly limited.

As described above, in the present embodiment, the paint residue is collected with the bubble-containing alkaline water or acid water, and thus it is possible to promote the reaction between the paint residue and the functional water by the action of the bubbles.

### (Second embodiment)

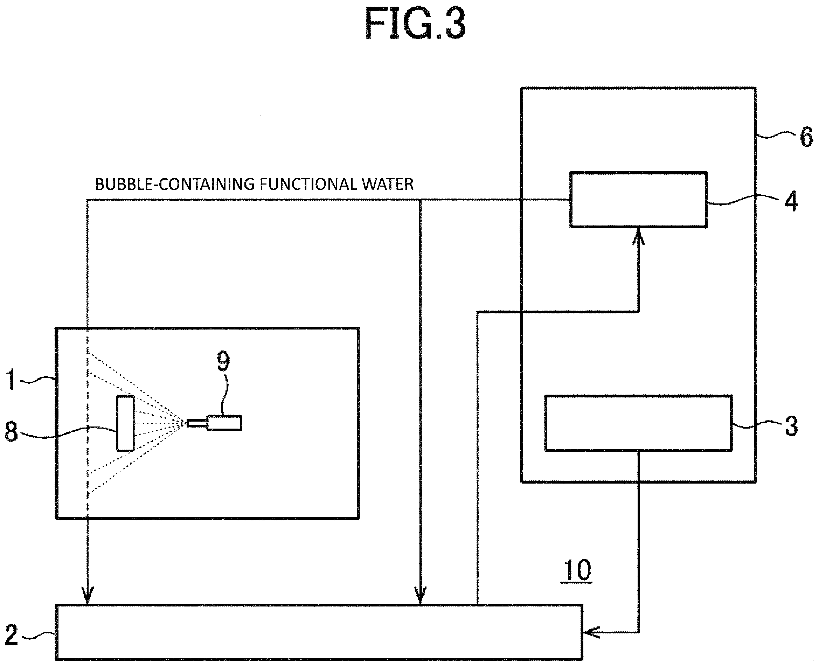

A second embodiment will then be described. Fig. 3 is a schematic diagram showing a collecting system 10 according to the present embodiment. In the present embodiment, as compared with the first embodiment, the flow of the functional water is changed. Since it is possible to adopt the same configurations as in the first embodiment for the other points, the detailed description thereof will be omitted.

As shown in Fig. 3, in the present embodiment, the functional water generator 3 supplies the functional water to the storage chamber 2. On the other hand, the bubble generator 4 receives the functional water from the storage chamber 2 so as to generate the bubbles. The functional water stored in the storage chamber 2 contains the precipitated paint residue. Hence, in the piping connecting the storage chamber and the bubble generator 4 together, a filtration device (filter) or the like for removing impurities such as the paint residue is provided (not shown).

According to the present embodiment, the same effects as in the first embodiment can be achieved. In addition, although the filter or the like needs to be provided, the functional water can be circulated, and thus it is possible to further reduce the amount of functional water used and necessary for the precipitation processing on the paint residue .

### (Third embodiment)

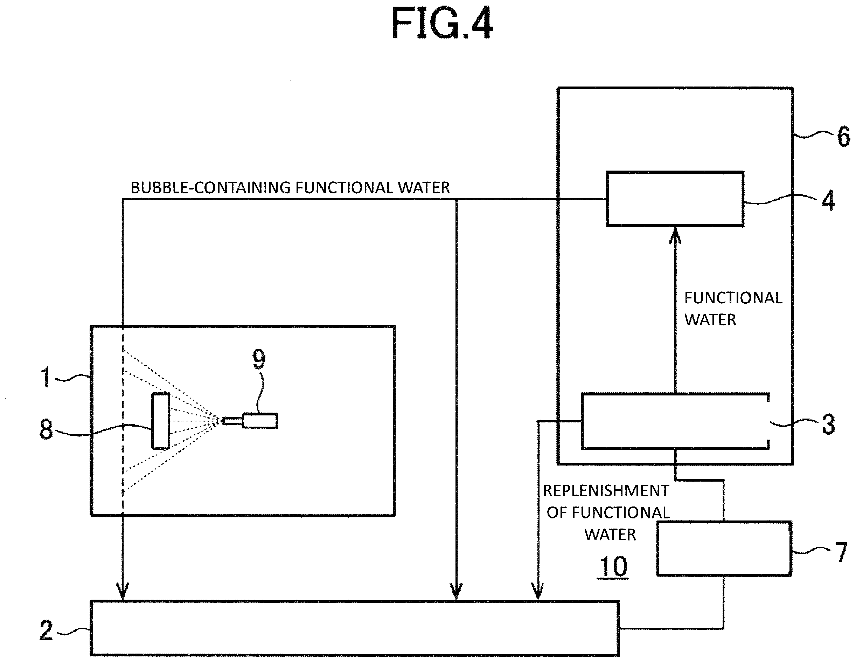

A third embodiment will then be described. Fig. 4 is a schematic diagram showing a collecting system 10 according to the present embodiment. In the present embodiment, as compared with the first embodiment, a measuring device 7 is added. The functional water generator 3 is configured so as to supply the functional water not only to the bubble generator 4 but also to the storage chamber 2. Since it is possible to adopt the same configurations as in the above-described embodiments for the other points, the detailed description thereof will be omitted.

The measuring device 7 is configured so as to measure the pH and/or the ORP of the functional water in the storage chamber 2. The measurement results by the measuring device 7 are notified to the functional water generator 3. Based on the measurement results of the pH and/or the ORP, the functional water generator 3 replenishes the storage chamber 2 with the functional water such that the pH and/or the ORP of the paint collecting water in the storage chamber 2 are previously set values.

In the present embodiment, since the storage chamber 2 is replenished with the functional water such that the desired pH and/or the ORP are achieved, it is possible to maintain the pH and/or the ORP necessary for precipitating the paint residue . Moreover, since the storage chamber 2 is replenished with the functional water only when it is necessary to do so, it is possible to save the amount of functional water used. Furthermore, as described in the above-discussed embodiments, since the bubble-containing functional water is used, even when the pH and the OPP are slightly varied, it is possible to precipitate the paint residue, and thus the storage chamber 2 is replenished with only a small amount of functional water for maintaining the pH and the ORP, with the result that it is possible to reduce the cost necessary for the generation of the functional water.

Although the present invention is described above with the first to third embodiments, these embodiments are not independent of each other, and they can be used by being combined unless otherwise a contradiction arises.

### (Experimental Examples)

The present invention will be described in detail below using Experimental Examples. However, the present invention is not limited at all to the Experimental Examples which will be described below.

### [Examination on the effects of micro bubbles when an oil paint is used or when neutral water or alkaline electrolyzed water is used]

### Example 1

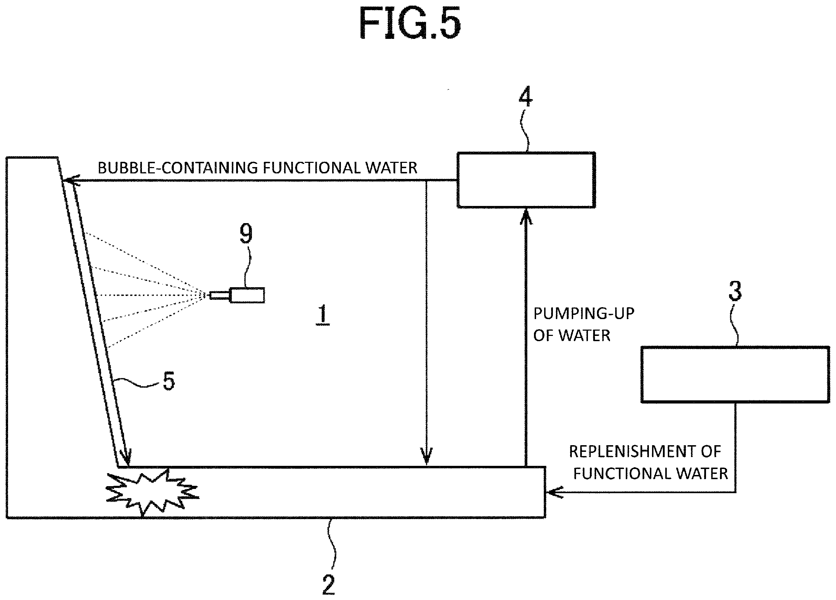

As shown in Fig. 5, a collecting system for the experiment was prepared. With this collecting system 10, the functional water was supplied from the functional water generator 3 to the storage chamber 2. The functional water was pumped up from the storage chamber 2 with the bubble generator 4, and the micro bubbles were generated with the agitation member using the high-speed gear. The functional water containing the micro bubbles was supplied from the bubble generator 4 to an upper portion of the side surface of the painting booth 1 so as to form the water curtain 5. In the painting booth 1, an oil paint was sprayed to the water curtain 5. The functional water flowing down on the side surface of the painting booth 1 was stored in the storage chamber 2. The functional water containing the micro bubbles was also directly supplied from the bubble generator 4 to the storage chamber 2.

Here, as the functional water, alkaline electrolyzed water (pH = 9.2) obtained by electrolyzing an NaCl aqueous solution was used.

The paint residue was scooped up from the functional water stored in the storage chamber 2, and the dispersed state thereof was evaluated. The dispersed state was evaluated based on a scale of four letters, that is, A to D. A case where the paint residue was able to be collected as a clump of paint without being adhered to hands was represented by "A," a case where the paint residue was adhered to hands and was not able to be removed was represented by "D" and intermediates therebetween were represented sequentially from "A" by "B" and "C."

### Example 2

As the functional water, instead of the alkaline electrolyzed water, neutral water was used. The generation of the micro bubbles with the bubble generator 4 was not performed, and the neutral water in which no micro bubbles were present was supplied to the painting booth 1 and the storage chamber 2. The same conditions as in Example 1 were used for the other points, and the dispersed state of the paint residue in the storage chamber 2 was evaluated.

### Example 3

Instead of the functional water, neutral water was used. The same conditions as in Example 1 were used for the other points, and the dispersed state of the paint residue in the storage chamber 2 was evaluated.

### Example 4

The alkaline electrolyzed water was supplied to the painting booth 1 without the generation of the micro bubbles. The same conditions as in Example 1 were used for the other points, and the dispersed state of the paint residue in the storage chamber 2 was evaluated.

The results of Examples 1 to 4 are shown in the table below.

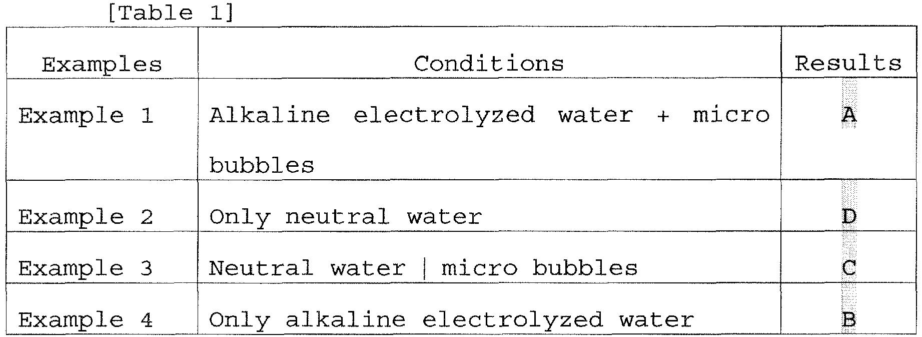

As shown in table 1, it was confirmed that in Example 1, as compared with Examples 2 to 4, the paint residue is easily collected as a clump and that the paint residue is easily removed from the storage chamber 2. In other words, it was confirmed that the paint residue is collected with the liquid which serves as the functional water and in which the micro bubbles are generated in the alkaline electrolyzed water, and that the paint residue is easily precipitated.

When Examples 2 and 3 are compared, in Example 3, there was a tendency that the paint residue was easily collected as a clump. In other words, it was confirmed that when the paint is an oil paint, there is a tendency that the paint residue is easily precipitated with the micro bubbles.

Although a large difference was not observed between Examples 3 and 4, there was a tendency that in Example 4, the paint residue was somewhat easily collected as a clump. It is considered that this is because the electrolyzed water has a lower molecular size and the paint residue is easily precipitated.

### [Examination on the effects of micro bubbles when alkaline water is prepared with a chemical agent]

### Example 5

Alkaline water in which Na₂CO₃ was added to adjust the pH to be 9.2 was used as the functional water. The same conditions as in Example 1 were used for the other points, and the dispersed state of the paint residue in the liquid in the storage chamber 2 was evaluated.

### Example 6

Under the same conditions as in Example 5, the functional water was supplied to the painting booth 1 without the generation of the micro bubbles, and the dispersed state of the paint residue in the storage chamber 2 was evaluated.

The results of Examples 5 and 6 are shown in the table below.

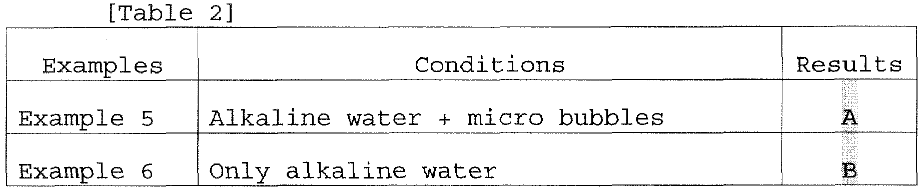

As shown in table 2, the satisfactory results of Example 5 were obtained as compared with Example 6. In other words, it was confirmed that even when instead of alkaline electrolyzed water, the liquid whose pH of the water is adjusted with the chemical agent such as Na₂CO₃ such that alkalinity is shown is used, it is possible to promote the precipitation of the paint residue by the generation of the micro bubbles.

### [Examination on the effects of micro bubbles when a cationic water paint is used]

### Example 7

As the paint, a water paint in which an ammonium group was provided was used. As the functional water, acid water whose pH was adjusted with HCl to be 3.2 was used. The functional water was supplied to the painting booth 1 without the generation of the micro bubbles. The same conditions as in Example 1 were used for the other points, and the dispersed state of the paint residue in the storage chamber 2 was evaluated.

### Example 8

As the functional water, alkaline water whose pH was adjusted with Na₂CO₃ to be 9.2 was used. The same conditions as in Example 7 were used for the other points, and the dispersed state of the paint residue in the storage chamber 2 was evaluated.

### Example 9

The micro bubbles were generated in the functional water, and the functional water was supplied to the painting booth 1. The same conditions as in Example 7 were used for the other points, and the dispersed state of the paint residue in the storage chamber 2 was evaluated.

### Example 10

The micro bubbles were generated in the functional water, and the functional water was supplied to the painting booth 1. The same conditions as in Example 8 were used for the other points, and the dispersed state of the paint residue in the storage chamber 2 was evaluated.

The results of Examples 7 to 10 are shown in the table below.

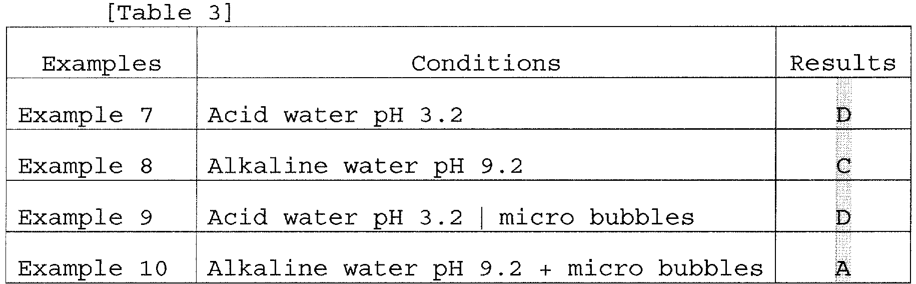

As shown in table 3, there was a tendency that in Example 10, as compared with Examples 7 to 9, the paint residue was easily collected as a clump. In other words, it was confirmed that when a water paint in which an ammonium group is provided, that is, a cationic water paint is used, alkaline water is used as the functional water, the micro bubbles are generated and thus the precipitation of the paint residue is promoted.

On the other hand, when Examples 7 and 9 are compared, a difference in the dispersed state of the paint residue was not produced. In other words, it was confirmed that when the paint is a water paint, regardless of use of the micro bubbles, no difference in the precipitation of the paint residue may be produced.

### [Examination on the effects of micro bubbles when a cationic water paint is used]

### Example 11

As the paint, a water paint in which a carboxyl group was provided was used. As the functional water, acid water whose pH was adjusted with HCl to be 3.2 was used. The functional water was supplied to the painting booth 1 without the generation of the micro bubbles. The same conditions as in Example 1 were used for the other points, and the dispersed state of the paint residue in the storage chamber 2 was evaluated.

### Example 12

As the functional water, alkaline water whose pH was adjusted with Na₂CO₃ to be 9.2 was used. The same conditions as in Example 11 were used for the other points, and the dispersed state of the paint residue in the storage chamber 2 was evaluated.

### Example 13

The micro bubbles were generated in the functional water, and the functional water was supplied to the painting booth 1. The same conditions as in Example 12 were used for the other points, and the dispersed state of the paint residue in the storage chamber 2 was evaluated.

### Example 14

The micro bubbles were generated in the functional water, and the functional water was supplied to the painting booth 1. The same conditions as in Example 11 were used for the other points, and the dispersed state of the paint residue in the storage chamber 2 was evaluated.

The results of Examples 11 to 14 are shown in the table below.

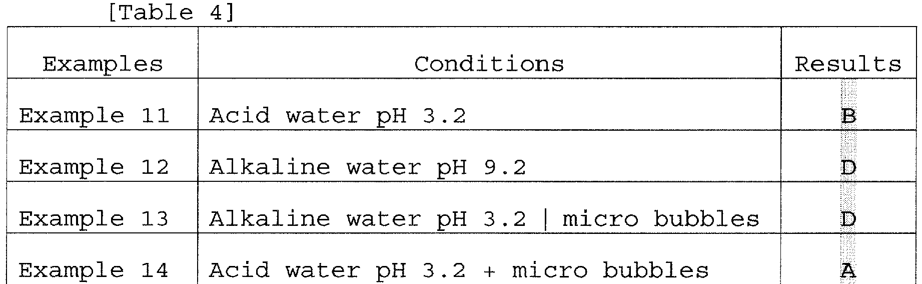

As shown in table 4, there was a tendency that in Example 14, as compared with Examples 11 to 13, the paint residue was easily collected as a clump. In other words, it was confirmed that when a water paint (anionic water paint) in which a carboxyl group is provided is used, acid water is used as the functional water, the micro bubbles are generated and thus the precipitation of the paint residue is promoted.

On the other hand, when Examples 12 and 13 are compared, a difference in the dispersed state of the paint residue was not produced. In other words, it was confirmed that when the paint is a water paint, regardless of use of the micro bubbles, no difference in the precipitation of the paint residue may be produced.

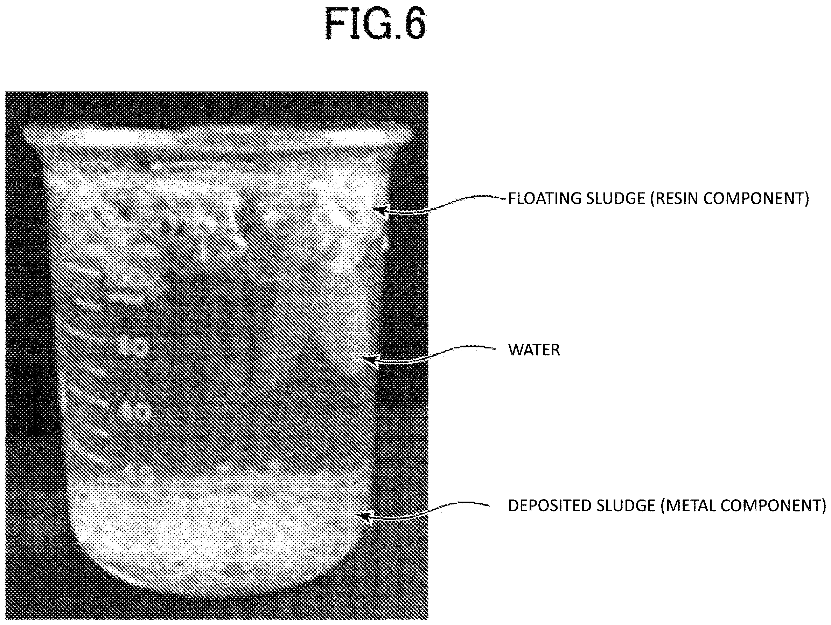

Fig. 6 is a photograph which was obtained by collecting the functional water in the storage chamber 2 in Example 1. As shown in Fig. 5, in the paint residue, the resin component is floated as the floating sludge, and the pigment component (metal component) is deposited as volume sludge.

As shown in the Experimental Examples described above, it is found that in the processing of a paint residue, micro bubbles are generated in predetermined functional water, the functional water is supplied to a painting booth, or both the painting booth and a storage chamber, thus a chemical reaction between a paint and the functional water is promoted by an agitation effect produced by pressure and bubbles when the bubbles disappear, and consequently a significant effect is produced even on a water paint on which it is difficult to perform processing.

It was confirmed that when a paint is a water paint, the state of the precipitation of a paint residue may not be varied simply by use of micro bubbles. In other words, it was confirmed that the precipitation reaction of a paint residue is promoted only after alkaline or acid functional water and micro bubbles are combined according to the type of water paint.

## Claims

1. A system (10) of collecting a paint residue, the system (10) comprising:
a bubble-containing functional water generation portion (6) which is configured so as to generate functional water that is bubble-containing alkaline water or acid water;
a paint collecting portion (1) which collects the paint residue with the functional water; and
a storage portion (2) which recovers the functional water from the paint collecting portion (1) and which stores the functional water,
wherein the paint collecting portion (1) is configured such that the functional water flows down on a wall surface of a water curtain formation member so as to form a water membrane, and
the paint residue is collected by colliding with the water membrane.

2. The system (10) of collecting a paint residue according to Claim 1,
wherein the functional water generation portion (6) is configured so as to generate micro bubbles as the bubbles.

3. The system (10) of collecting a paint residue according to Claim 1 or 2,
wherein the bubbles are formed by oxygen, hydrogen or air.

4. The system (10) of collecting a paint residue according to any one of Claims 1 to 3,
wherein the alkaline water or acid water is alkaline electrolyzed water or acid electrolyzed water which is obtained by electrolysis.

5. The system (10) of collecting a paint residue according to any one of Claims 1 to 4,
wherein the alkaline water or acid water is gas-dissolved water which is obtained by dissolving oxygen ozone, active hydrogen or hydrogen gas in water.

6. The system (10) of collecting a paint residue according to any one of Claims 1 to 5,
wherein the paint residue is derived from a cationic paint, and
the functional water has a pH of 8 to 14.

7. The system (10) of collecting a paint residue according to any one of Claims 1 to 5,
wherein the paint residue is derived from an anionic paint, and
the functional water has a pH of 1 to 6.

8. The system (10) of collecting a paint residue according to any one of Claims 1 to 7, the system (10) further comprising:
a measuring device (7) which is configured so as to measure the pH of the functional water in the storage portion,
wherein the functional water generation portion (6) is configured so as to replenish, based on the measurement results with the measuring device (7), the storage portion (2) with the alkaline water or acid water such that the pH of the functional water in the storage portion (2) has a preset value.

9. The system (10) of collecting a paint residue according to any one of Claims 1 to 8,
wherein the bubble-containing functional water generation portion (6) includes:
a functional water generator (3) which generates the alkaline water or acid water; and
a bubble generator (4) which generates the bubbles in the alkaline water or acid water, and
the bubble generator (4) is configured so as to receive the alkaline water or acid water from the functional water generator (3) without intervention of the storage portion.

10. The system (10) of collecting a paint residue according to any one of Claims 1 to 8,
wherein the bubble-containing functional water generation portion (6) includes:
a functional water generator (3) which generates the alkaline water or acid water; and
a bubble generator (4) which generates the bubbles in the alkaline water or acid water,
the functional water generator (3) is configured so as to supply the functional water to the storage portion (2) and
the bubble generator (4) is configured so as to receive the functional water from the storage portion (2).

11. A method of collecting a paint residue, the method comprising:
a step of generating functional water that is bubble-containing alkaline water or acid water;
a step of collecting the paint residue with the functional water; and
a step of recovering the functional water after the collecting step and storing the functional water,
wherein the collecting step includes:
a step of supplying the functional water such that the functional water flows down on a wall surface of a water curtain formation member so as to form a water membrane, and
a step of collecting the paint residue by making the paint residue collide with the water membrane.

12. The method of collecting a paint residue according to Claim 11,
wherein the paint residue is derived from a cationic paint, and
the functional water has a pH of 8 to 14.

13. The method of collecting a paint residue according to Claim 11,
wherein the paint residue is derived from an anionic paint, and
the functional water has a pH of 1 to 6.

## Patentansprüche

1. System (10) zum Sammeln eines Lackrückstands, wobei das System (10) umfaßt.
einen Erzeugungsabschnitt (6) bezüglich Blasen-enthaltenden funktionellen Wassers, welcher konfiguriert ist, um funktionelles Wasser zu erzeugen, das Blasen-enhaltendes alkalisches Wasser oder saures Wasser ist,
einen Lacksammelabschnitt (1), welcher den Lackrückstand mit dem funktionellen Wasser sammelt, und
einen Lagerabschnitt (2), der das funktionelle Wasser von dem Lacksammelabschnitt (1) rückgewinnt und welcher das funktionelle Wasser lagert, wobei der Lacksammelabschnitt (1) derart konfiguriert ist, dass das funktionelle Wasser auf einer Wandoberfläche eines Wasservorhangbildungselements derart hinunterfließt, eine Wassermembran zu bilden, und
der Lackrückstand durch Kollision mit der Wassermembran gesammelt wird.

2. System (10) zum Sammeln eines Lackrückstands gemäß Anspruch 1, wobei der Erzeugungsabschnitt (6) bezüglich des funktionellen Wassers derart konfiguriert ist, Mikroblasen als die Blasen zu erzeugen.

3. System (10) zum Sammeln eines Lackrückstands gemäß Anspruch 1 oder 2, wobei die Blasen durch Sauerstoff, Wasserstoff oder Luft gebildet werden.

4. System (10) zum Sammeln eines Lackrückstands gemäß einem der Ansprüche 1 bis 3, wobei das alkalische Wasser oder saure Wasser alkalisch elektrolysiertes Wasser oder saures elektrolysiertes Wasser ist, welches durch Elektrolyse erhalten worden ist.

5. System (10) zum Sammeln eines Lackrückstands gemäß einem der Ansprüche 1 bis 4, wobei das alkalische Wasser oder saure Wasser Gas-gelöstes Wasser ist, welches durch Lösen von Sauerstoff, Ozon, aktivem Wasserstoff oder Wasserstoffgas in Wasser erhalten worden ist.

6. System (10) zum Sammeln eines Lackrückstands gemäß einem der Ansprüche 1 bis 5, wobei der Lackrückstand von einem kationischen Lack bzw. Anstrich abgeleitet ist, und
das funktionelle Wasser einen pH von 8 bis 14 aufweist.

7. System (10) zum Sammeln eines Lackrückstands gemäß einem der Ansprüche 1 bis 5, wobei der Lackrückstand von einem anionischen Anstrich abgeleitet ist, und das funktionelle Wasser einen pH von 1 bis 6 aufweist.

8. System (10) zum Sammeln eines Lackrückstands gemäß einem der Ansprüche 1 bis 7, wobei das System (10) weiter umfaßt:
eine Meßvorrichtung (7), welche derart konfiguriert ist, den pH des funktionellen Wassers in dem Lagerabschnitt zu messen,
wobei der Erzeugungsabschnitt (6) bezüglich des funktionellen Wassers derart konfiguriert ist, basierend auf den Meßergebnissen mit der Meßvorrichtung (7), den Lagerabschnitt (2) mit dem alkalischen Wasser oder saurem Wasser derart aufzufüllen, dass der pH des funktionellen Wassers in dem Lagerabschnitt (2) einen voreingestellten Wert aufweist.

9. System (10) zum Sammeln eines Lackrückstands gemäß einem der Ansprüche 1 bis 8, wobei der Erzeugungsabschnitt (6) bezüglich Blasen-enthaltenden funktionellen Wassers einschließt:
einen Generator bezüglich funktionellen Wassers (3), welcher das alkalische Wasser oder saure Wasser erzeugt, und
einen Blasengenerator (4), welcher die Blasen in dem alkalischen Wasser oder saurem Wasser erzeugt, und
der Blasengenerator (4) derart konfiguriert ist, das alkalische Wasser oder saure Wasser von dem Generator bezüglich funktionellen Wassers (3) ohne Intervention des Lagerabschnitts zu empfangen.

10. System (10) zum Sammeln eines Lackrückstands gemäß einem der Ansprüche 1 bis 8,
wobei der Erzeugungsabschnitt (6) bezüglich Blasen-enthaltenden funktionellen Wassers einschließt:
einen Generator bezüglich funktionellen Wassers (3), welcher das alkalische Wasser oder saure Wasser erzeugt, und
einen Blasengenerator (4), welcher die Blasen in dem alkalischen Wasser oder saurem Wasser erzeugt,
der Generator bezüglich funktionellen Wassers (3) derart konfiguriert ist, das funktionelle Wasser zu dem Lagerabschnitt (2) zu leiten, und
der Blasengenerator (4) derart konfiguriert ist, das funktionelle Wasser von dem Lagerabschnitt (2) zu empfangen.

11. Verfahren zum Sammeln eines Lackrückstands, wobei das Verfahren umfaßt:
einen Schritt des Erzeugens von funktionellem Wasser, welches Blasenenthaltendes alkalisches Wasser oder saures Wasser ist,
ein Schritt des Sammelns des Lackrückstands mit dem funktionellen Wasser, und
einen Schritt des Rückgewinnens des funktionellen Wassers nach dem Sammelschritt und Lagern des funktionellen Wassers,
wobei der Sammelschritt einschließt:
einen Schritt des Zuführens des funktionellen Wassers derart, dass das funktionelle Wasser auf einer Wandoberfläche eines Wasservorhangdbildungselements derart herunterfließt, eine Wassermembran zu bilden, und
einen Schritt des Sammelns des Lackrückstands durch Kollidieren des Lackrückstands mit der Wassermembran.

12. Verfahren zum Sammeln eines Lackrückstands gemäß Anspruch 11, wobei der Lackrückstand von einem kationischen Lack abgeleitet ist und das funktionelle Wasser einen pH von 8 bis 14 aufweist.

13. Verfahren zum Sammeln eines Lackrückstands gemäß Anspruch 11, wobei der Lackrückstand von einem anionischen Lackabgeleitet ist und das funktionelle Wasser einen pH von 1 bis 6 aufweist.

## Revendications

1. Système (10) de collecte d'un résidu de peinture, le système (10) comprenant:
une partie de production d'eau fonctionnelle contenant des bulles (6) laquelle est configurée pour produire de l'eau fonctionnelle qui est de l'eau acide ou de l'eau alcaline contenant des bulles;
une partie de collecte de peinture (1) qui collecte le résidu de peinture avec l'eau fonctionnelle; et
une partie de stockage (2) qui récupère l'eau fonctionnelle de la partie de collecte de peinture (1) et qui stocke l'eau fonctionnelle,
dans lequel la partie de collecte de peinture (1) est configurée de telle sorte que l'eau fonctionnelle s'écoule le long d'une surface de paroi d'un élément de formation d'un rideau d'eau de manière à former une membrane d'eau, et
le résidu de peinture est collecté lors d'une collision avec la membrane d'eau.

2. Système (10) de collecte d'un résidu de peinture selon la revendication 1,
dans lequel la partie de production d'eau fonctionnelle (6) est configurée de manière à produire comme bulles, des microbulles.

3. Système (10) de collecte d'un résidu de peinture selon la revendication 1 ou 2, dans lequel les bulles sont formées par l'oxygène, l'hydrogène ou l'air.

4. Système (10) de collecte d'un résidu de peinture selon l'une quelconque des revendications 1 à 3,
dans lequel l'eau alcaline ou l'eau acide est de l'eau alcaline électrolysée ou de l'eau acide électrolysée qu'on obtient par électrolyse.

5. Système (10) de collecte d'un résidu de peinture selon l'une quelconque des revendications 1 à 4,
dans lequel l'eau alcaline ou l'eau acide est de l'eau avec gaz dissous qu'on obtient en dissolvant l'ozone-oxygène, l'hydrogène actif ou l'hydrogène gazeux dans l'eau.

6. Système (10) de collecte d'un résidu de peinture selon l'une quelconque des revendications 1 à 5,
dans lequel le résidu de peinture est dérivé d'une peinture cationique,
et
l'eau fonctionnelle a un pH allant de 8 à 14.

7. Système (10) de collecte d'un résidu de peinture selon l'une quelconque des revendications 1 à 5,
dans lequel le résidu de peinture est dérivé d'une peinture anionique,
et
l'eau fonctionnelle a un pH allant de 1 à 6.

8. Système (10) de collecte d'un résidu de peinture selon l'une quelconque des revendications 1 à 7, ce système (10) comprenant en outre:
un appareil de mesure (7) configuré de manière à mesurer le pH de l'eau fonctionnelle dans la partie de stockage,
dans lequel la partie de production d'eau fonctionnelle (6) est configurée de manière à restaurer, sur base des résultats de mesure par l'appareil de mesure (7), la partie de stockage (2) avec l'eau alcaline ou l'eau acide de sorte que le pH de l'eau fonctionnelle dans la partie de stockage (2) présente une valeur préétablie.

9. Système (10) de collecte d'un résidu de peinture selon l'une quelconque des revendications 1 à 8,
dans lequel la partie de production d'eau fonctionnelle contenant des bulles (6) comprend:
un générateur d'eau fonctionnelle (3) qui produit l'eau alcaline ou l'eau acide; et
un générateur de bulles (4) qui produit les bulles dans l'eau alcaline ou l'eau acide; et
le générateur de bulles (4) est configuré de manière à recevoir l'eau alcaline ou l'eau acide du générateur d'eau fonctionnelle (3) sans l'intervention de la partie de stockage.

10. Système (10) de collecte d'un résidu de peinture selon l'une quelconque des revendications 1 à 8,
dans lequel la partie de production d'eau fonctionnelle contenant des bulles (6) comprend:
un générateur d'eau fonctionnelle (3) qui produit l'eau alcaline ou l'eau acide; et
un générateur de bulles (4) qui produit les bulles dans l'eau alcaline ou l'eau acide; et
le générateur d'eau fonctionnelle (3) est configuré de manière à alimenter la partie de stockage (2) en eau fonctionnelle, et
le générateur de bulles (4) est configuré de manière à recevoir l'eau fonctionnelle de la partie de stockage (2).

11. Procédé de collecte d'un résidu de peinture, le procédé comprenant:
une étape de production d'eau fonctionnelle, qui est de l'eau acide ou de l'eau alcaline contenant des bulles;
une étape de collecte du résidu de peinture avec l'eau fonctionnelle; et
une étape de récupération de l'eau fonctionnelle après l'étape de collecte et de stockage de l'eau fonctionnelle,
dans lequel l'étape de collecte comprend:
une étape d'alimentation en eau fonctionnelle de sorte que l'eau fonctionnelle s'écoule le long d'une surface de paroi d'un élément de formation d'un rideau d'eau de manière à former une membrane d'eau, et
une étape de collecte du résidu de peinture en faisant que le résidu de peinture entre en collision avec la membrane d'eau.

12. Procédé de collecte d'un résidu de peinture selon la revendication 11,
dans lequel le résidu de peinture est dérivé d'une peinture cationique,
et
l'eau fonctionnelle a un pH allant de 8 à 14.

13. Procédé de collecte d'un résidu de peinture selon la revendication 11,
dans lequel le résidu de peinture est dérivé d'une peinture anionique,
et
l'eau fonctionnelle a un pH allant de 1 à 6.
